# EUROPEAN PATENT SPECIFICATION

(11) **EP 3 608 194 B1**
(45) Date of publication and mention of the grant of the patent: **21.06.2023**
(21) Application number: 18780777.1
(22) Date of filing: 31.01.2018
(51) Int. Cl.: B60W 50/14, B60W 30/00, G08G 1/0962, G08G 1/16, B60W 60/00, B60W 40/04, B60W 50/08

(54) **VEHICLE CONTROL DEVICE**
FAHRZEUGSTEUERUNGSVORRICHTUNG
DISPOSITIF DE COMMANDE DE VÉHICULE

(30) Priority: 07.04.2017 JP 2017077136
(43) Date of publication of application: 12.02.2020
(73) Proprietor: Hitachi Astemo, Ltd., Hitachinaka-shi, Ibaraki 312-8503 (JP)
(72) Inventor: MITSUHASHI, Masahito, Hitachinaka-shi Ibaraki 312-8503 (JP)
(74) Representative: MERH-IP Matias Erny Reichl Hoffmann Patentanwälte PartG mbB
(86) International application number: PCT/JP2018/003103
(87) International publication number: WO 2018/186012

(56) References cited:
- JP-A- 2007 058 631
- JP-A- 2007 276 733
- JP-A- 2009 286 274
- JP-A- 2009 286 274
- JP-A- 2015 215 319
- JP-A- 2016 181 031

## Description

### Technical Field

The present invention relates to a vehicle control device.

### Background Art

In recent years, research on an autonomous driving technology for detecting the behavior of another vehicle around an own vehicle, a surrounding environment, and the like with various sensors and controlling a travel state of the own vehicle has been conducted. In such an autonomous driving technology, when a switch from autonomous driving to driver's manual driving is required, it is preferable that the switch be quickly and safely made. PTL 1 discloses a control method in which a determination is made whether autonomous driving cannot be continued, and when the determination result shows that autonomous driving cannot be continued, the driver is made to recognize, preliminarily before autonomous driving is disabled, the possibility that autonomous driving is disabled.

### Citation List

### Patent Literature

PTL 1: JP 2015-178332 A

JP 2009 286274 A discloses that traffic density behind a vehicle is evaluated, and that a driver is informed that the running state of the vehicle may cause congestion.

JP 2007 058631 A discloses determining that a vehicle causes traffic jam and informing a driver to change lanes, or performing a lane change autonomously.

### Summary of Invention

### Technical Problem

According to the control method disclosed in PTL 1, when autonomous driving cannot be continued, autonomous driving is disabled, and then a switch to manual driving is made. However, even under a condition where autonomous driving can be continued, when the own vehicle obstructs the travel of another vehicle or is traveling not with the flow of traffic, for example, the ongoing autonomous driving results in a travel state in which the driver feels discomfort, and therefore, it may be preferable that the switch from autonomous driving to manual driving be made in accordance with a driver's determination. According to the control method disclosed in PTL 1, the driver cannot determine whether to switch from autonomous driving to manual driving in such a case, and therefore, the driver's discomfort cannot be eliminated.

### Solution to Problem

The above problem is solved by a vehicle control device according to claim 1.

### Advantageous Effects of Invention

According to the present invention, when the own vehicle in the autonomous-driving mode obstructs the travel of another vehicle or is traveling not with the flow of traffic, it is possible to bring the own vehicle into a travel state in which the driver does not feel discomfort.

### Brief Description of Drawings

[FIG. 1] FIG. 1 is a block diagram of a vehicle equipped with a vehicle control device according to an embodiment of the present invention.
[FIG. 2] FIG. 2 is a functional block diagram illustrating a main part of the vehicle control device according to the embodiment of the present invention.
[FIG. 3] FIG. 3 is a flowchart of processing to be performed by a vehicle integrated control unit.
[FIG. 4] FIG. 4 is a diagram illustrating examples of a case determined that an own vehicle obstructs the travel of another vehicle.
[FIG. 5] FIG. 5 shows, in list form, examples of the case determined that the own vehicle obstructs the travel of another vehicle and a case determined that the own vehicle is traveling not with the flow of traffic.
[FIG. 6] FIG. 6 is a diagram illustrating an example of the case determined that the own vehicle obstructs the travel of another vehicle.
[FIG. 7] FIG. 7 is a diagram illustrating an example of the case determined that the own vehicle obstructs the travel of another vehicle.
[FIG. 8] FIG. 8 is a diagram illustrating an example of the case determined that the own vehicle obstructs the travel of another vehicle.
[FIG. 9] FIG. 9 is a diagram illustrating an example of the case determined that the own vehicle is traveling not with the flow of traffic.

### Description of Embodiments

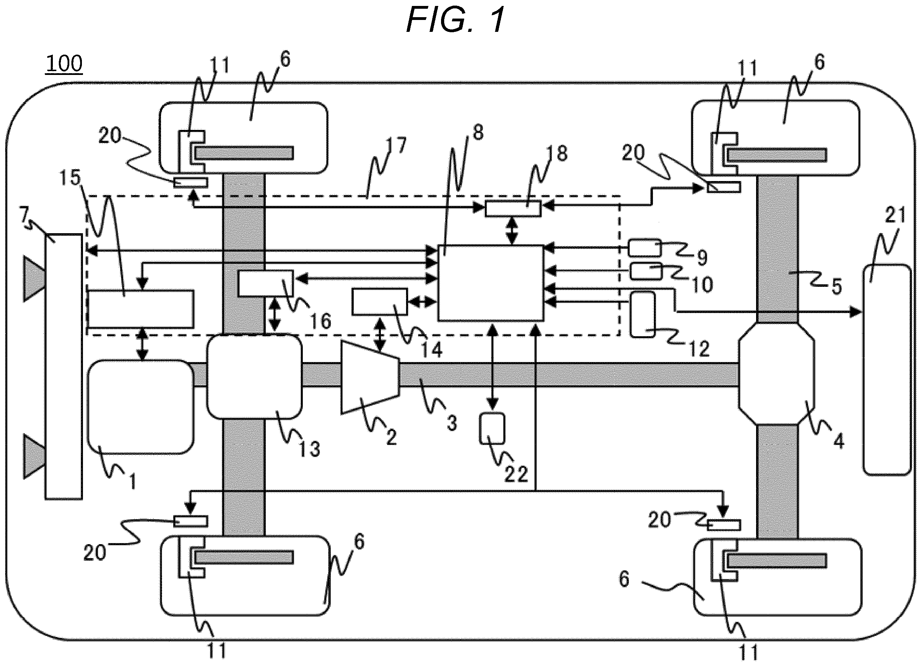

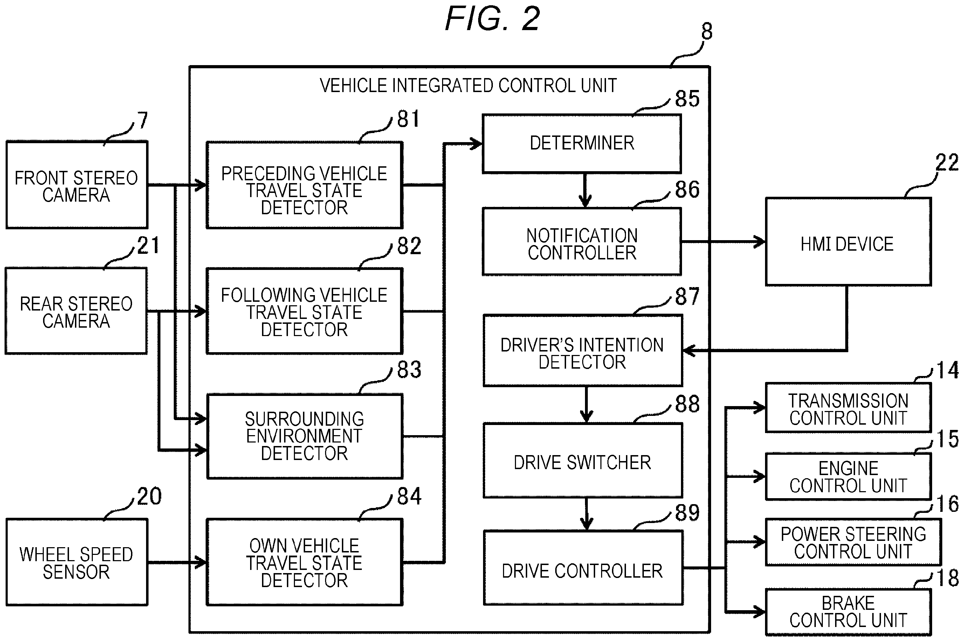

Hereinafter, a description will be given in detail of a vehicle control device according to the present invention with reference to the drawings. FIG. 1 is a block diagram of a vehicle equipped with the vehicle control device according to an embodiment of the present invention, and FIG. 2 is a functional block diagram illustrating a main part of the vehicle control device illustrated in FIG. 1.

A vehicle 100 illustrated in FIG. 1 is a rear-wheel-drive vehicle that has a typical structure and is capable of autonomous driving. The vehicle 100 includes an engine 1, an automatic transmission 2, a propeller shaft 3, a differential gear 4, a drive shaft 5, four wheels 6 and hydraulic brakes 11, and a steering mechanism 13. The engine 1 serving as a traction power source of the vehicle 100 is, for example, a direct injection gasoline or diesel engine that mixes fuel such as gasoline with air and combusts the mixture to produce a drive force. The automatic transmission 2 mechanically connects or disconnects the engine 1 to or from the propeller shaft 3 at a predetermined gear ratio. The drive force produced by the engine 1 is transmitted to rear wheels 6 serving as driving wheels through the automatic transmission 2, the propeller shaft 3, the differential gear 4, and the drive shaft 5 to allow the vehicle 100 to travel.

The vehicle 100 is equipped with a vehicle control device 17 for autonomous driving. The vehicle control device 17 includes an engine control unit 15 configured to control the engine 1, a transmission control unit 14 configured to control the automatic transmission 2, a power steering control unit 16 configured to control the steering mechanism 13, and a brake control unit 18 configured to control the hydraulic brakes 11, and a vehicle integrated control unit 8 configured to control these control units in an integrated manner. The control units included in the vehicle control device 17 are each, for example, an electronic control unit (ECU) including a microcomputer, a ROM, a RAM, and the like and communicate signals and data with each other over a communication line such as a local area network (LAN) or controller area network (CAN) built in the vehicle 100.

The steering mechanism 13 includes an electric motor and changes a direction of front wheels 6 serving as steered wheels to change a travel direction of the vehicle 100 in response to a steering operation performed by a driver or under control of the power steering control unit 16. The hydraulic brakes 11 apply a braking force to the vehicle 100 by pressing brake pads against a brake rotor provided in each of the wheels 6 in response to a brake operation performed by the driver or under control of the brake control unit 18.

At the front and rear of the vehicle 100, a front stereo camera 7 and a rear stereo camera 21 are installed, respectively, as outside recognition sensors. The front stereo camera 7 and the rear stereo camera 21 each include an imaging unit that images an area ahead of or behind the vehicle 100 in binocular vision at a predetermined parallax, and a control unit including a microcomputer and the like. Each of the control units of the front stereo camera 7 and the rear stereo camera 21 calculates, based on images of a preceding vehicle or a following vehicle, a surrounding obstacle, a road sign, a road marking, a traffic light, and the like captured as subjects by a corresponding imaging unit, a relative speed and relative distance (car-to-car distance) of each of the subjects with respect to the vehicle 100, a vertical position of each of the subjects from a road surface, and the like and gives the calculation results to the vehicle integrated control unit 8. When the vehicle 100 is in autonomous-driving mode, the vehicle integrated control unit 8 performs autonomous-driving control on the vehicle 100 based on the pieces of information given from the front stereo camera 7 and the rear stereo camera 21. Note that any device other than such a stereo camera is applicable as the outside recognition sensor. For example, the outside recognition sensor may be formed of one or a combination of a laser radar, a millimeter wave radar, C2X communication such as car-to-car communication (C2C) or car-to-infrastructure communication (C2I), a monocular camera, and the like, and the autonomous driving may be performed while obtaining states of the preceding vehicle, the following vehicle, an obstacle, and the like to be recognized.

In addition to the pieces of information given from the front stereo camera 7 and the rear stereo camera 21, signals from an accelerator pedal sensor 9, a brake pedal sensor 10, a steering sensor 12, and a wheel speed sensor 20 are given to the vehicle integrated control unit 8. The accelerator pedal sensor 9 detects an accelerator position (a pressing amount of an accelerator pedal) . The brake pedal sensor 10 detects a pressing amount of a brake pedal. The steering sensor 12 detects a steering angle. The wheel speed sensor 20 is provided for each of the four wheels 6 and detects a rotation speed of a corresponding one of the wheels 6. The vehicle integrated control unit 8 detects a drive operation performed by the driver based on the detection signal output from each of the sensors and determines instruction contents for each of the engine control unit 15, the transmission control unit 14, the power steering control unit 16, and the brake control unit 18. Then, the vehicle integrated control unit 8 performs control on each of the control units in accordance with the instruction contents thus determined to control the engine 1, the automatic transmission 2, the steering mechanism 13, and the hydraulic brakes 11. Note that the instruction contents from the vehicle integrated control unit 8 to each of the control units may be determined based on detection signals from sensors other than the above-described sensors. For example, it is conceivable to use a detection signal from a gyro sensor that detects a direction and inclination of the vehicle 100, a detection signal from a fluid pressure sensor that detects a brake fluid pressure, or the like.

Furthermore, the vehicle integrated control unit 8 is connected with an HMI device 22. The HMI device 22 includes, for example, a display device, a speaker, an operation switch, a microphone, a voice recognition device, and the like and provides various information to the driver under the control of the vehicle integrated control unit 8 and outputs a signal corresponding to an operation input or voice input made by the driver to the vehicle integrated control unit 8.

The engine control unit 15 receives data from the vehicle integrated control unit 8 and the transmission control unit 14. Further, various signals relating to an operation state of the engine 1 (a number of revolutions, an intake air volume, a throttle position, an in-cylinder pressure, and the like) are given to the engine control unit 15 from sensors (not illustrated) provided in the engine 1. The engine control unit 15 gives, based on these signals and pieces data, predetermined control signals to an ignition unit consisting of a fuel injection valve, an ignition coil, an ignition plug, and the like, an electronically controlled throttle valve, and the like to perform fuel injection control, ignition control, throttle control on the engine 1. Note that a configuration where the engine 1 is a diesel engine eliminates the need of the ignition unit.

Note that the structure of the vehicle 100 illustrated in FIG. 1 is an example of the structure of a vehicle to which the present invention is applicable and is not intended to limit the scope of the present invention as defined by the appended claims. For example, such a vehicle may be a vehicle equipped with a continuously variable transmission (CVT) as the automatic transmission 2 or may be an electric vehicle in which an electric motor is installed instead of the engine 1. Further, the vehicle may be a hybrid vehicle that uses both the engine 1 and the electric motor. The present invention is applicable to any vehicle as long as long as the vehicle is capable of switching between autonomous driving and manual driving.

Next, a description will be given in detail of the vehicle integrated control unit 8 with reference to FIG. 2. As illustrated in FIG. 2, the vehicle integrated control unit 8 includes, as its functions, a preceding vehicle travel state detector 81, a following vehicle travel state detector 82, a surrounding environment detector 83, an own vehicle travel state detector 84, a determiner 85, a notification controller 86, a driver's intention detector 87, a drive switcher 88, and a drive controller 89. Note that, in the following description, the vehicle 100 equipped with the vehicle integrated control unit 8 will be referred to as "own vehicle".

The preceding vehicle travel state detector 81 acquires pieces of information such as the relative speed and the car-to-car distance of the preceding vehicle that is traveling or stopping ahead of the own vehicle from the front stereo camera 7 to detect the travel state of the preceding vehicle based on the pieces of information. Specifically, the preceding vehicle travel state detector 81 calculates a travel speed, acceleration or deceleration, a change in car-to-car distance, and the like of the preceding vehicle to detect the travel state of the preceding vehicle. Note that the preceding vehicle travel state detector 81 may detect the travel state of the preceding vehicle based on a captured image acquired from the front stereo camera 7.

The following vehicle travel state detector 82 acquires pieces of information such as the relative speed and the car-to-car distance of the following vehicle that is traveling or stopping behind the own vehicle from the rear stereo camera 21 to detect the travel state of the following vehicle based on the pieces of information. Specifically, the following vehicle travel state detector 82 calculates a travel speed, acceleration or deceleration, a change in car-to-car distance, and the like of the following vehicle to detect the travel state of the following vehicle. Note that the following vehicle travel state detector 82 may detect the travel state of the following vehicle based on a captured image acquired from the rear stereo camera 21.

Note that the preceding vehicle travel state detector 81 and the following vehicle travel state detector 82 each detect the travel state of another vehicle that is either the preceding vehicle or the following vehicle. Therefore, the preceding vehicle travel state detector 81 and the following vehicle travel state detector 82 may be collectively referred to as "another vehicle travel state detector" below.

The surrounding environment detector 83 detects a surrounding environment of the own vehicle based on the pieces of information given from the front stereo camera 7 and the rear stereo camera 21. Specifically, the surrounding environment detector 83 detects an object other than a vehicle present ahead of or behind the own vehicle, such as an obstacle, a road sign, a road marking, or a traffic light, to detect the surrounding environment of the own vehicle. Furthermore, the surrounding environment detector 83 may detect the surrounding environment of the own vehicle including the state of the preceding vehicle and the state of the following vehicle. Note that the surrounding environment detector 83 may detect the surrounding environment of the own vehicle based on captured images acquired from the front stereo camera 7 or the rear stereo camera 21.

The own vehicle travel state detector 84 detects the travel state of the own vehicle based on a signal from the wheel speed sensor 20. Specifically, the own vehicle travel state detector 84 calculates a travel speed, acceleration or deceleration, and the like of the own vehicle to detect the travel state of the own vehicle. Note that the own vehicle travel state detector 84 may use information other than the signal from the wheel speed sensor 20, such as information from the front stereo camera 7 or the rear stereo camera 21 or position information on the own vehicle acquired with a GPS sensor (not illustrated) and detect the travel state of the own vehicle.

The determiner 85 determines whether the own vehicle in the autonomous-driving mode obstructs the travel of another vehicle based on at least one of the pieces of information on the travel state of the preceding vehicle, the travel state of the following vehicle, the surrounding environment, and the travel state of the own vehicle respectively detected by the preceding vehicle travel state detector 81, the following vehicle travel state detector 82, the surrounding environment detector 83, and the own vehicle travel state detector 84. The term "another vehicle" as used herein generally refers to the following vehicle, but may include the preceding vehicle or any other different vehicle present around the own vehicle. Furthermore, the determiner 85 determines, based on at least one of the pieces of information, whether the own vehicle in the autonomous-driving mode is traveling with the flow of traffic. The determiner 85 notifies the notification controller 86 of the determination result. Note that the details of the determination made by the determiner 85 will be described later with reference to a specific example.

The notification controller 86 controls the HMI device 22 based on the determination result notified from the determiner 85 to give a notification to the driver. When the determiner 85 determines that the own vehicle obstructs the travel of another vehicle or the own vehicle is traveling not with the flow of traffic, the notification controller 86 outputs, to the HMI device 22, a signal for notifying the driver of the determination result to give the driver a suggestion for a switch from autonomous driving to manual driving. The HMI device 22 gives the notification to the driver through a predetermined screen display or voice output based on the signal from the notification controller 86, and waits for a response from the driver. At this time, the notification may be given to the driver through vibrations applied to the steering or reaction force applied to the accelerator pedal. When the driver responds to the notification from the HMI device 22 through the operation input to the operation switch or the voice input to the microphone, a signal corresponding to response contents is output from the HMI device 22 to the vehicle integrated control unit 8.

The driver's intention detector 87 detects a driver's intention for the notification given by the notification controller 86 based on the signal from the HMI device 22. Specifically, the driver's intention detector 87 identifies the response contents from the driver based on the signal input from the HMI device 22 and determines whether the driver intends to continue autonomous driving or intends to switch from autonomous driving to manual driving. Note that the driver's intention detector 87 may detect the driver's intention based on the accelerator position detected by the accelerator pedal sensor 9, the pressing amount of the brake pedal detected by the brake pedal sensor 10, the steering angle detected by the steering sensor 12, or the like. Note that the driver's intention detector 87 may detect the driver's intention even when the notification controller 86 does not give the notification to the driver.

The drive switcher 88 switches the drive mode of the own vehicle in accordance with the driver's intention detected by the driver's intention detector 87. Specifically, when the driver intends to switch from autonomous driving to manual driving, the drive switcher 88 instructs the drive controller 89 to switch the drive mode of the own vehicle from autonomous driving to manual driving. On the other hand, when the driver intends to continue autonomous driving, the drive switcher 88 instructs the drive controller 89 to continue the ongoing autonomous driving.

The drive controller 89 controls the transmission control unit 14, the engine control unit 15, the power steering control unit 16, and the brake control unit 18. When the own vehicle is in the autonomous-driving mode, the drive controller 89 controls each of the control units based on the pieces of information on the preceding vehicle, the following vehicle, the obstacle, the surrounding environment, and the like given from the front stereo camera 7 or the rear stereo camera 21 as described above to perform the autonomous-driving control. At this time, the drive controller 89 may use, for example, the travel state of the preceding vehicle, the travel state of the following vehicle, the surrounding environment, and the travel state of the own vehicle respectively detected by the preceding vehicle travel state detector 81, the following vehicle travel state detector 82, the surrounding environment detector 83, and the own vehicle travel state detector 84. On the other hand, when the own vehicle is in the manual-driving mode, the drive controller 89 detects the drive operation based on the detection signal from each of the sensors such as the accelerator pedal sensor 9, the brake pedal sensor 10, the steering sensor 12, and the wheel speed sensor 20 as described above and controls each of the control units. Note that the autonomous-driving control may be partially combined in the manual-driving mode.

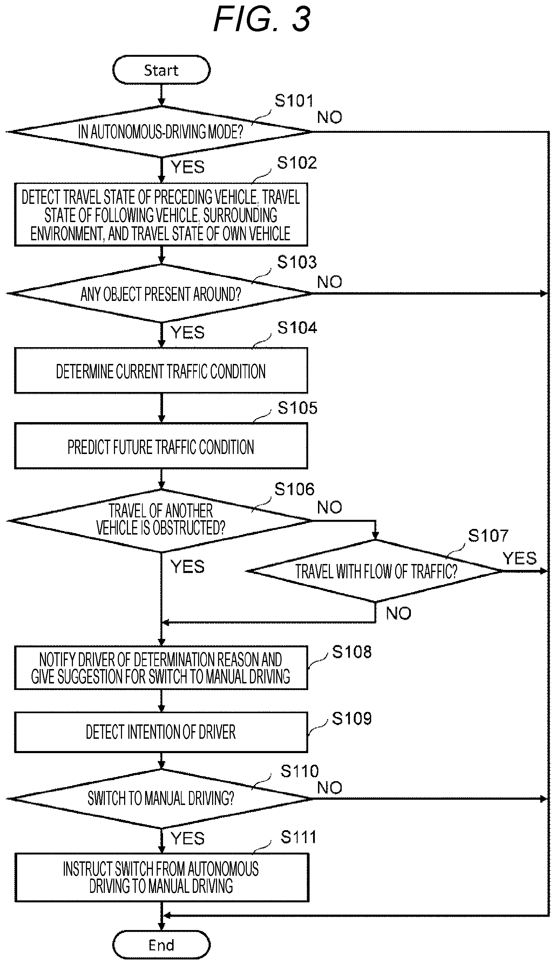

Next, a description will be given in detail of control contents to be performed by the vehicle integrated control unit 8 with reference to the flowchart of FIG. 3. FIG. 3 is a flowchart of processing to be performed by the vehicle integrated control unit 8. The vehicle integrated control unit 8 performs the processing shown in FIG. 3 at predetermined processing cycles.

In step S101, the vehicle integrated control unit 8 determines whether the own vehicle is in the autonomous-driving mode. When the own vehicle is in the autonomous-driving mode, the processing proceeds to step S102, and when the own vehicle is in the manual-driving mode, the flowchart of FIG. 3 is terminated.

In step S102, the vehicle integrated control unit 8 detects the travel state of the preceding vehicle, the travel state of the following vehicle, the surrounding environment, and the travel state of the own vehicle with the preceding vehicle travel state detector 81, the following vehicle travel state detector 82, the surrounding environment detector 83, and the own vehicle travel state detector 84.

In step S103, the vehicle integrated control unit 8 determines, based on each detection result in step S102, whether any object is present around the own vehicle. When the determination result shows that another vehicle (either the preceding vehicle or the following vehicle), an obstacle, or the like is present around the own vehicle, the processing proceeds to step S104. On the other hand, when such an object is not present around the own vehicle, a determination is made that the subsequent processing is unnecessary, and then the flowchart of FIG. 3 is terminated.

In step S104, the vehicle integrated control unit 8 determines the current traffic conditions around the own vehicle based on each detection result in step S102. Herein, the vehicle integrated control unit 8 acquires the current travel state of the preceding vehicle or the following vehicle present around the own vehicle or acquires the current surrounding environment such as an obstacle, a road sign, a road marking, or a traffic signal and determines the current traffic conditions around the own vehicle.

In step S105, the vehicle integrated control unit 8 predicts the future traffic conditions around the own vehicle based on the current traffic conditions around the own vehicle determined in step S103. Herein, for a prediction period from the present to a predetermined time later, the vehicle integrated control unit 8 predicts a change in travel state of the preceding vehicle or the following vehicle present around the own vehicle or a change in surrounding environment such as an obstacle, a road sign, a road marking, or a traffic signal to make a prediction of the future traffic conditions around the own vehicle. Note that when it is difficult to predict the future traffic conditions around the own vehicle due to a lack of information or the like, step S105 need not be executed.

In step S106, the vehicle integrated control unit 8 causes the determiner 85 to determine whether the own vehicle obstructs the travel of another vehicle based on the current traffic conditions around the own vehicle determined in step S104 and the future traffic conditions around the own vehicle predicted in step S105. In a situation where, under the current or future traffic conditions, it is likely that the own vehicle will be determined to have obstructed the path of the following vehicle, for example, the vehicle integrated control unit 8 determines that the own vehicle obstructs the travel of another vehicle and causes the processing to proceed to step S108. On the other hand, when it is not in such a situation, the vehicle integrated control unit 8 determines that the own vehicle does not obstruct the travel of another vehicle and causes the processing to proceed to step S107.

In step S107, the vehicle integrated control unit 8 causes the determiner 85 to determine whether the own vehicle is traveling with the flow of traffic based on the current traffic conditions around the own vehicle determined in step S104 and the future traffic conditions around the own vehicle predicted in step S105. In a situation, under the current or future traffic conditions, it is likely that the own vehicle will be determined to be traveling not with the same flow as the preceding vehicle or the following vehicle or a determination will be made that there is a difference in vehicle flow between a travel lane of the own vehicle and another travel lane, the vehicle integrated control unit 8 determines that the own vehicle is traveling not with the flow of traffic and causes the processing to proceed to step S108. On the other hand, when it is not in such a situation, the vehicle integrated control unit 8 determines that the own vehicle is traveling with the flow of traffic and terminates the flowchart of FIG. 3.

In step S108, the vehicle integrated control unit 8 causes the notification controller 86 to notify the driver of a determination reason based on the determination result in step S106 or step S107 using the HMI device 22 to give the driver a suggestion for the switch from autonomous driving to manual driving. At this time, the notification controller 86 outputs a predetermined signal to the HMI device 22 to cause the HMI device 22 to notify the driver of the fact that the own vehicle obstructs the travel of another vehicle or the own vehicle is traveling not with the flow of traffic by image, voice, or the like.

In step S109, the vehicle integrated control unit 8 causes the driver's intention detector 87 to detect the driver's intention for the notification given in step S108 based on the operation input or voice input made by the driver to the HMI device 22. Accordingly, the vehicle integrated control unit 8 determines whether the driver intends to switch to manual driving or to continue autonomous driving in response to the suggestion for the switch from autonomous driving to manual driving.

In step S110, the vehicle integrated control unit 8 determines whether to switch the drive mode of the own vehicle from autonomous driving to manual driving based on the driver's intention detected in step S109. When the driver intends to switch to manual driving, the processing proceeds to step Sill. When the driver intends to continue autonomous driving, the switch to manual driving is unnecessary, which terminates the flowchart of FIG. 3.

In step Sill, the vehicle integrated control unit 8 causes the drive switcher 88 to instruct the drive controller 89 to switch from autonomous driving to manual driving. The drive controller 89 switches, in accordance with this instruction, control of each of the transmission control unit 14, the engine control unit 15, the power steering control unit 16, and the brake control unit 18 based on the information from the front stereo camera 7 or the rear stereo camera 21 to control in response to the drive operation performed by the driver. This causes the drive mode of the own vehicle to switch from autonomous driving to manual driving. When step Sill is completed, the flowchart of FIG. 3 is brought to an end.

In the vehicle control device 17 according to the present embodiment, the vehicle integrated control unit 8 performs the above-described processing to give the driver the suggestion for the switch from autonomous driving to manual driving in accordance with the traffic conditions around the own vehicle. Further, the notification of the reason for the suggestion allows autonomous-driving control without making the driver feel discomfort.

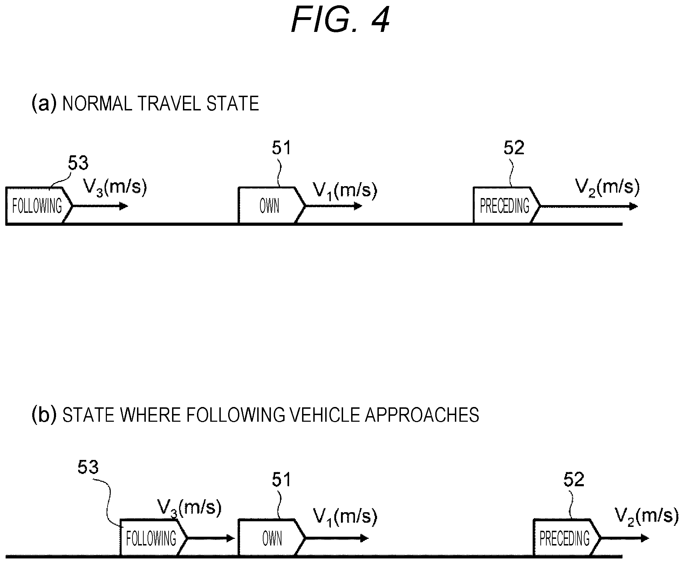

Next, a description will be given of various examples of the determinations made in steps S106 and S107 of FIG. 3 with reference to FIGS. 4 to 9.

FIG. 4 is a diagram illustrating examples of a case determined that the own vehicle obstructs the travel of another vehicle in step S106. The examples in FIG. 4 show a situation where a preceding vehicle 52 traveling at a speed V₂ is present ahead of an own vehicle 51 traveling at a speed V₁, and a following vehicle 53 traveling at a speed V₃ is present behind the own vehicle 51.

In FIG. 4(a), the preceding vehicle 52 and the following vehicle 53 are traveling with a certain distance left ahead of and behind the own vehicle 51. As illustrated in FIG. 4(b), it is assumed that the preceding vehicle 52 moves away from the own vehicle 51, and the following vehicle 53 approaches the own vehicle. In this case, a determination is made in step S106 that the own vehicle 51 is not sufficiently accelerating and thus obstructs the travel of another vehicle, that is, the following vehicle 53.

Generally, in the autonomous-driving mode, acceleration that gives little sense of discomfort or little sense of danger to any occupant is only available and accordingly is not enough depending on the flow of traffic, which in turn may obstruct the travel of the following vehicle. In such a situation, the vehicle control device 17 according to the present embodiment can determine that the own vehicle obstructs the travel of another vehicle and give the driver the suggestion for the switch from autonomous driving to manual driving. Therefore, when the driver feels discomfort in the travel state of the own vehicle in the autonomous-driving mode as compared with the surrounding traffic conditions, the driver's discomfort can be eliminated.

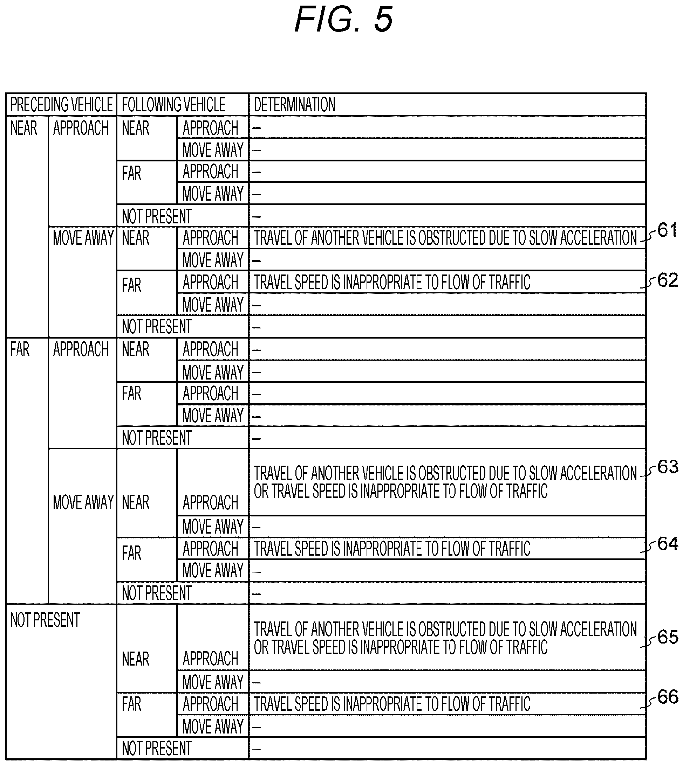

FIG. 5 shows, in list form, examples of the case determined in step S106 that the own vehicle obstructs the travel of another vehicle and the case determined in step S107 that the own vehicle is traveling not with the flow of traffic. As denoted by reference numerals 61 to 66 in the table of FIG. 5, when the preceding vehicle is not present or away from the own vehicle, and the following vehicle approaches the own vehicle, a determination is made that the own vehicle obstructs the travel of another vehicle or the own vehicle is traveling not with the flow of traffic, and the suggestion for the switch from autonomous driving to manual driving is given to the driver.

Note that only the suggestion for the switch from autonomous driving to manual driving may cause the driver who do not mind that the own vehicle in the autonomous-driving mode is traveling not with the flow of traffic to feel discomfort due to an unnecessary notification. To address such a situation, as described in step S108 of FIG. 3, the reason for the suggestion is given to the driver together with the suggestion for the switch to manual driving, allowing the driver to appropriately determine whether to continue autonomous driving. Further, even when the driver does not know the traffic conditions because of the autonomous-driving mode, it is also possible to cause the driver to know the traffic conditions and then to determine whether to switch to manual driving.

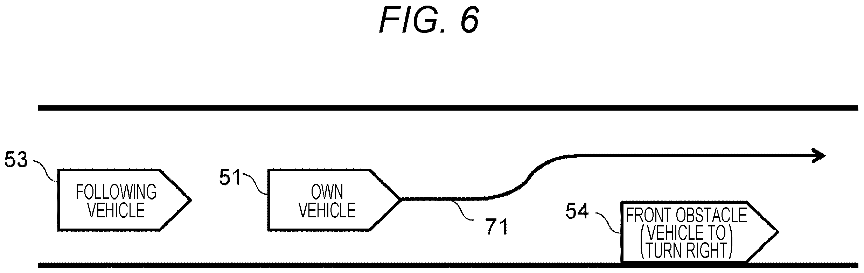

FIG. 6 is a diagram illustrating an example of the case determined in step S106 that the own vehicle obstructs the travel of another vehicle. The example illustrated in FIG. 6 shows a situation where the preceding vehicle that is stopping for right turn is present as a front obstacle 54 ahead of the own vehicle 51, and the following vehicle 53 is stopping behind the own vehicle 51 or approaches the own vehicle 51. In the situation illustrated in FIG. 6, the own vehicle 51 needs to pass by on the side of the front obstacle 54 as indicated by a travel path 71, but may autonomously stop behind the front obstacle 54 in consideration of safety in the autonomous-driving mode. In this case, the own vehicle 51 obstructs the travel of the following vehicle 53.

Therefore, in the travel state of another vehicle detected by the another vehicle travel state detector (the preceding vehicle travel state detector 81 and the following vehicle travel state detector 82), when the following vehicle 53 is present behind the own vehicle 51 as illustrated in FIG. 6, and the own vehicle 51 is predicted to be stopping or come to a stop due to the autonomous-driving mode, a determination is made in step S106 that the own vehicle 51 obstructs the travel of another vehicle, that is, the following vehicle 53. Then, the determination result is notified as the reason for the suggestion, and the suggestion for the switch from autonomous driving to manual driving is given to the driver. At this time, as a more specific reason for the suggestion, a reason such as "the own vehicle is kept stopping until there is no vehicle waiting for right turn" may be notified to the driver. Further, as advice to the driver when switching to manual driving, for example, a notification such as "it becomes travel at the time of passing by" may be made.

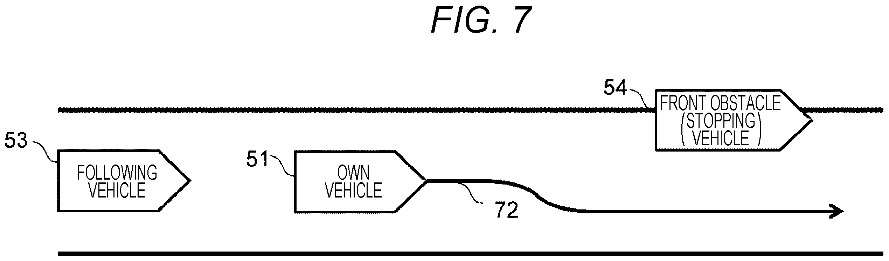

FIG. 7 is a diagram illustrating an example of the case determined in step S106 that the own vehicle obstructs the travel of another vehicle. The example illustrated in FIG. 7 shows a situation where the preceding vehicle stopping ahead of the own vehicle 51 is present as the front obstacle 54, and the following vehicle 53 is stopping behind the own vehicle 51 or approaches the own vehicle 51. In the situation illustrated in FIG. 7, the own vehicle 51 needs to pass by on the side of the front obstacle 54 as indicated by a travel path 72, but may autonomously stop behind the front obstacle 54 in consideration of safety in the autonomous-driving mode. In this case, the own vehicle 51 obstructs the travel of the following vehicle 53.

Therefore, in the travel state of another vehicle detected by the another vehicle travel state detector, when the following vehicle 53 is present behind the own vehicle 51 as illustrated in FIG. 7, and the own vehicle 51 is predicted to be stopping or come to a stop due to the autonomous-driving mode, a determination is made in step S106 that the own vehicle 51 obstructs the travel of another vehicle, that is, the following vehicle 53. Then, the determination result is notified as the reason for the suggestion, and the suggestion for the switch from autonomous driving to manual driving is given to the driver. At this time, as a more specific reason for the suggestion, a reason such as "the own vehicle is kept stopping until the vehicle stopping pulls away" may be notified to the driver. Further, as advice to the driver when switching to manual driving, for example, a notification such as "it becomes travel at the time of passing by" may be made.

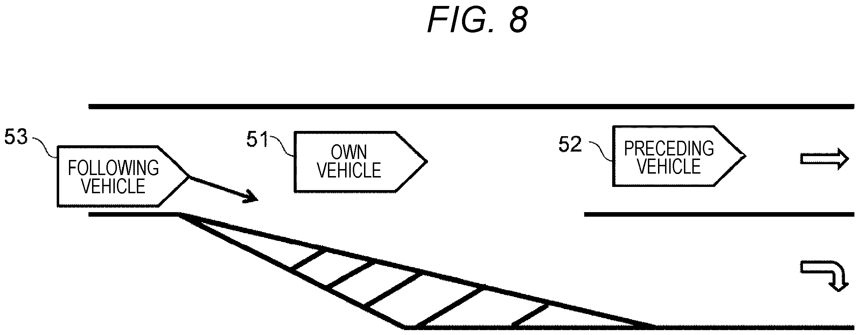

FIG. 8 is a diagram illustrating an example of the case determined in step S106 that the own vehicle obstructs the travel of another vehicle. The example illustrated in FIG. 8 shows a situation where the own vehicle 51 is stopping with a predetermined margin distance left with respect to the preceding vehicle 52 located ahead of the own vehicle 51 in a through lane, and the following vehicle 53 approaches from behind the own vehicle 51 to enter a right turn lane. In the situation illustrated in FIG. 8, the own vehicle 51 in the autonomous-driving mode is stopping near a branch point to the right turn lane despite the fact that an enough space is left ahead of the own vehicle 51, and, as a result, obstructs the travel of the following vehicle 53.

Therefore, in the travel state of the own vehicle detected by the own vehicle travel state detector 84 or the travel state of another vehicle detected by the another vehicle travel state detector, when the own vehicle 51 is stopping with the predetermined margin distance left ahead of the own vehicle 51 as illustrated in FIG. 8, and the following vehicle 53 approaches or is predicted to approach the own vehicle 51 to enter the right turn lane, a determination is made in step S106 that the own vehicle 51 obstructs the travel of another vehicle, that is, the following vehicle 53. Then, the determination result is notified as the reason for the suggestion, and the suggestion for the switch from autonomous driving to manual driving is given to the driver. At this time, as a more specific reason for the suggestion, a reason such as "there is a space where it can move forward, but it is stopping, which obstructs the following vehicle" may be notified to the driver.

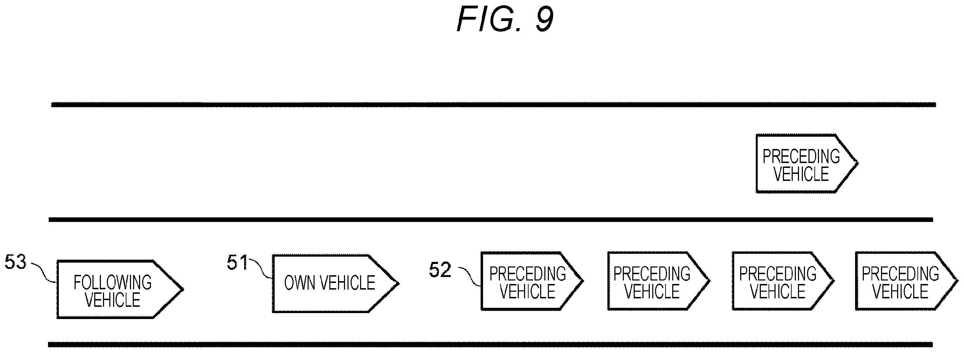

FIG. 9 is a diagram illustrating an example of the case determined in step S107 that the own vehicle is traveling not with the flow of traffic. The example illustrated in FIG. 9 shows a situation where the own vehicle 51 and the following vehicle 53 are in a congested lane, and the adjacent lane is less congested. When an accident or the like occurs in the vicinity of a junction where a plurality of lanes merge into one lane or in any of the plurality of lanes, a difference occurs in the degree of congestion among the lanes, which may prevent the own vehicle 51 from traveling with the flow of traffic.

Therefore, in the travel state of the own vehicle detected by the own vehicle travel state detector 84 or the surrounding environment detected by the surrounding environment detector 83, when the situation as illustrated in FIG. 9 occurs, a determination is made in step S107 that the own vehicle is traveling not with the flow of traffic. Then, the determination result is notified as the reason for the suggestion, and the suggestion for the switch from autonomous driving to manual driving is given to the driver. At this time, the degree of congestion for each lane may be further determined, and a notification of which lane is less congested may be given to the driver. Further, contrary to FIG. 9, when the own vehicle is traveling in a lane clearly less congested than the other lanes, a warning notification may be given to the driver.

Note that, even in a situation other than the examples in FIGS. 4 to 9 described above, it is possible to make a determination in step S106 that the own vehicle obstructs the travel of another vehicle or a determination in step S107 that the own vehicle is traveling not with the flow of traffic. As long as an appropriate suggestion for the switch from autonomous driving to manual driving can be given to the driver, the determination conditions of steps S106 and S107 can be set in accordance with various other situations according to the appended claims.

According to the embodiment of the present invention described above, the following effects can be obtained.
(1) The vehicle control device 17 controls the own vehicle capable of autonomous driving, and when the own vehicle is in the autonomous-driving mode (YES in step S101), and the own vehicle obstructs the travel of another vehicle (YES in step S106) or the own vehicle is traveling not with the flow of traffic (NO in step S107), a notification is given to the driver of the own vehicle (step S108). Accordingly, when the own vehicle in the autonomous-driving mode obstructs the travel of another vehicle or is traveling not with the flow of traffic, the own vehicle can be brought into a travel state in which the driver does not feel discomfort.
(2) The vehicle control device 17 includes, in the vehicle integrated control unit 8, the another vehicle travel state detector, that is, the preceding vehicle travel state detector 81 and the following vehicle travel state detector 82, configured to detect the travel state of another vehicle, the determiner 85 configured to determine whether the own vehicle obstructs the travel of another vehicle based on the travel state of another vehicle, and the notification controller 86 configured to output a signal for causing the notification device, that is the HMI device 22, installed in the own vehicle to make the notification when the determiner 85 determines that the own vehicle obstructs the travel of another vehicle. Accordingly, in a situation where the own vehicle in the autonomous-driving mode obstructs the travel of another vehicle, it is possible to accurately determine the situation and notify the driver of the situation.
(3) The following vehicle travel state detector 82 detects the travel state of the following vehicle traveling behind the own vehicle as the travel state of another vehicle. The determiner 85 determines whether the own vehicle obstructs the travel of another vehicle based on the travel state of the following vehicle. Specifically, as denoted by the reference numerals 61, 63, and 65 in FIG. 5, the determiner 85 determines that the own vehicle obstructs the travel of the following vehicle when the following vehicle approaches the own vehicle. Accordingly, in a situation where the own vehicle obstructs the travel of the following vehicle, it is possible to appropriately determine the situation.
(4) The preceding vehicle travel state detector 81 detects the travel state of the preceding vehicle that is traveling or stopping ahead of the own vehicle. The determiner 85 determines whether the own vehicle obstructs the travel of another vehicle based on the travel state of the preceding vehicle and the travel state of the following vehicle. Specifically, as illustrated in FIG. 4 and denoted by the reference numerals 61 and 63 in FIG. 5, the determiner 85 determines that the own vehicle obstructs the travel of the following vehicle when the preceding vehicle moves away from the own vehicle, and the following vehicle approaches the own vehicle. Further, as illustrated in FIG. 6 and FIG. 7, the determiner 85 determines that the own vehicle obstructs the travel of the following vehicle when the preceding vehicle is stopping ahead of the own vehicle, and the following vehicle is stopping behind the own vehicle or approaches the own vehicle. Accordingly, in such a situation, it is possible to appropriately determine that the own vehicle obstructs the travel of the following vehicle.
(5) The vehicle control device 17 further includes, in the vehicle integrated control unit 8, the own vehicle travel state detector 84 configured to detect the travel state of the own vehicle. As illustrated in FIG. 8, the determiner 85 determines that the own vehicle obstructs the travel of the following vehicle when the own vehicle is stopping with a predetermined margin distance left ahead of the own vehicle, and the following vehicle approaches the own vehicle. Accordingly, in such a situation, it is possible to appropriately determine that the own vehicle obstructs the travel of the following vehicle.
(6) The vehicle control device 17 includes, in the vehicle integrated control unit 8, the own vehicle travel state detector 84 configured to detect the travel state of the own vehicle, the surrounding environment detector 83 configured to detect the surrounding environment of the own vehicle, the determiner 85 configured to determine whether the own vehicle is traveling with the flow of traffic based on the travel state and the surrounding environment of the own vehicle, and the notification controller 86 configured to output a signal for causing the notification device, that is, the HMI device 22, installed in the own vehicle to make the notification when the determiner 85 determines that the own vehicle is traveling not with the flow of traffic. Specifically, the determiner 85 determines that the own vehicle is traveling not with the flow of traffic in a situation as illustrated in FIG. 9. Accordingly, in a situation where the own vehicle in the autonomous-driving mode is traveling not with the flow of traffic, it is possible to accurately determine the situation and notify the driver of the situation.
(7) The vehicle control device 17 further includes, in the vehicle integrated control unit 8, the driver's intention detector 87 configured to detect the intention of the driver of the own vehicle for the notification, and the drive switcher 88 configured to switch the drive mode of the own vehicle from autonomous driving to manual driving in accordance with the driver's intention. The notification controller 86 outputs information representing the result of the determination made by the determiner 85 as a signal for causing the HMI device 22 to make the notification. Accordingly, it is possible to notify the driver of the reason for the suggestion for the switch from autonomous driving to manual driving, cause the driver to determine whether to continue autonomous driving, and bring the own vehicle into the drive mode in accordance with the driver's intention.

The embodiments and various modifications described above are merely examples, and the present invention is not limited to these contents as long as the features of the invention as defined in the appended claims are not impaired. Further, although various embodiments and modifications have been described above, the present invention is not limited to these contents, even when changes are made without departing from the scope of the present invention as defined by the appended claims.

### Reference Signs List

- 1: engine
- 2: automatic transmission
- 3: propeller shaft
- 4: differential gear
- 5: drive shaft
- 6: wheel
- 7: front stereo camera
- 8: vehicle integrated control unit
- 9: accelerator pedal sensor
- 10: brake pedal sensor
- 11: hydraulic brake
- 12: steering sensor
- 13: steering mechanism
- 14: transmission control unit
- 15: engine control unit
- 16: power steering control unit
- 17: vehicle control device
- 18: brake control unit
- 20: wheel speed sensor
- 21: rear stereo camera
- 22: HMI device
- 81: preceding vehicle travel state detector
- 82: following vehicle travel state detector
- 83: surrounding environment detector
- 84: own vehicle travel state detector
- 85: determiner
- 86: notification controller
- 87: driver's intention detector
- 88: drive switcher
- 89: drive controller
- 100: vehicle

## Claims

1. A vehicle control device configured to control an own vehicle (100; 51) capable of autonomous driving,
wherein, when the own vehicle (51) in an autonomous driving mode obstructs travel of another vehicle (52; 53) or is traveling not with the flow of traffic, a notification is given to a driver of the own vehicle (51);
wherein the vehicle control device is comprising:
an another vehicle travel state detector (81; 82) configured to detect a travel state of the other vehicle;
a determiner (85) configured to determine whether the own vehicle (51) obstructs the travel of the other vehicle (52; 53) based on the travel state of the other vehicle;
a notification controller (86) configured to output a signal for causing a notification device (22) installed in the own vehicle (100; 51) to make the notification when the determiner (85) determines that the own vehicle (51) obstructs the travel of the other vehicle (52; 53);
a driver's intention detector (87) configured to detect an intention of the driver of the own vehicle (51) for the notification; and
a drive switcher (88) configured to switch a drive mode of the own vehicle (100; 51) from autonomous driving to manual driving in accordance with the intention of the driver,
wherein the notification controller (86) outputs information representing a result of the determination made by the determiner (85) to give the driver a suggestion for a switch from autonomous driving to manual driving as the signal.

2. The vehicle control device according to claim 1, wherein the another vehicle travel state detector (82) detects a travel state of a following vehicle (53) traveling behind the own vehicle (51) as the travel state of the other vehicle, and
the determiner (85) makes the determination based on the travel state of the following vehicle.

3. The vehicle control device according to claim 2, wherein, when the following vehicle (53) approaches the own vehicle (51), the determiner (85) determines that the own vehicle (51) obstructs travel of the following vehicle (53).

4. The vehicle control device according to claim 2 or 3, wherein the another vehicle travel state detector (81) further detects a travel state of a preceding vehicle (52; 54) that is traveling or is stopping ahead of the own vehicle (51), and
the determiner (85) makes the determination based on the travel state of the preceding vehicle and the travel state of the following vehicle.

5. The vehicle control device according to claim 4, wherein, when the preceding vehicle (52) moves away from the own vehicle (51), and the following vehicle (53) approaches the own vehicle (51), the determiner (85) determines that the own vehicle (51) obstructs the travel of the following vehicle (53).

6. The vehicle control device according to claim 4, wherein, when the preceding vehicle (54) is stopping ahead of the own vehicle (51), and the following vehicle (53) is stopping behind the own vehicle (51) or approaching the own vehicle (51), the determiner (85) determines that the own vehicle (51) obstructs the travel of the following vehicle (53) .

7. The vehicle control device according to claim 2 or 3, further comprising an own vehicle travel state detector (84) configured to detect a travel state of the own vehicle (51),
wherein, when the own vehicle (51) is stopping with a predetermined margin distance ahead of the own vehicle (51), and the following vehicle (53) approaches the own vehicle (51), the determiner (85) determines that the own vehicle (51) obstructs the travel of the following vehicle (53).

8. The vehicle control device according to claim 1, comprising:
an own vehicle travel state detector (84) configured to detect a travel state of the own vehicle (100; 51);
a surrounding environment detector (83) configured to detect a surrounding environment of the own vehicle (51);
wherein the determiner (85) is configured to determine whether the own vehicle (51) is traveling with the flow of traffic based on the travel state and the surrounding environment of the own vehicle (51); and
wherein the notification controller (86) is configured to output a signal for causing the notification device (22) installed in the own vehicle (100; 51) to make the notification when the determiner (85) determines that the own vehicle (51) is traveling not with the flow of traffic.

## Patentansprüche

1. Fahrzeugsteuerungsvorrichtung, die konfiguriert ist, ein Trägerfahrzeug (100; 51) zu steuern, das autonom fahren kann, wobei
dann, wenn das Trägerfahrzeug (51) in einem Modus für autonomes Fahren eine Bewegung eines weiteren Fahrzeugs (52; 53) behindert oder nicht mit dem Verkehrsfluss fährt, ein Fahrer des Trägerfahrzeugs (51) benachrichtigt wird und
die Fahrzeugsteuerungsvorrichtung Folgendes umfasst:
einen Detektor (81; 82) für einen Bewegungszustand eines weiteren Fahrzeugs, der konfiguriert ist, einen Bewegungszustand des weiteren Fahrzeugs zu detektieren;
eine Bestimmungsvorrichtung (85), die konfiguriert ist, auf der Grundlage des Bewegungszustands des weiteren Fahrzeugs zu bestimmen, ob das Trägerfahrzeug (51) die Bewegung des weiteren Fahrzeugs (52; 53) behindert;
eine Benachrichtigungssteuereinheit (86), die konfiguriert ist, ein Signal auszugeben, um zu verursachen, dass eine Benachrichtigungsvorrichtung (22), die im Trägerfahrzeug (100; 51) installiert ist, die Benachrichtigung vorzunehmen, wenn die Bestimmungsvorrichtung (85) bestimmt, dass das Trägerfahrzeug (51) die Bewegung des weiteren Fahrzeugs (52; 53) behindert;
einen Fahrerabsichtsdetektor (87), der konfiguriert ist, eine Absicht des Fahrers des Trägerfahrzeugs (51) für die Benachrichtigung zu detektieren; und
einen Fahrwechsler (88), der konfiguriert ist, einen Antriebsmodus des Trägerfahrzeugs (100; 51) in Übereinstimmung mit der Absicht des Fahrers von autonomem Fahren zu manuellem Fahren zu wechseln, wobei
die Benachrichtigungssteuereinheit (86) Informationen, die ein Ergebnis der Bestimmung, die durch die Bestimmungsvorrichtung (85) vorgenommen wurde, repräsentieren, um dem Fahrer einen Vorschlag für ein Wechseln von autonomem Fahren zu manuellem Fahren zu geben, als das Signal ausgibt.

2. Fahrzeugsteuerungsvorrichtung nach Anspruch 1, wobei der Detektor (82) für einen Bewegungszustand eines weiteren Fahrzeugs einen Bewegungszustand eines folgenden Fahrzeugs (53), das hinter dem Trägerfahrzeug (51) fährt, als den Bewegungszustand des weiteren Fahrzeugs detektiert und
die Bestimmungsvorrichtung (85) die Bestimmung auf der Grundlage des Bewegungszustands des folgenden Fahrzeugs vornimmt.

3. Fahrzeugsteuerungsvorrichtung nach Anspruch 2, wobei dann, wenn das folgende Fahrzeug (53) sich dem Trägerfahrzeug (51) nähert, die Bestimmungsvorrichtung (85) bestimmt, dass das Trägerfahrzeug (51) die Bewegung des folgenden Fahrzeugs (53) behindert.

4. Fahrzeugsteuerungsvorrichtung nach Anspruch 2 oder 3, wobei der Detektor (81) für einen Bewegungszustand eines weiteren Fahrzeugs ferner einen Bewegungszustand eines vorausfahrenden Fahrzeugs (52; 54), das vor dem Trägerfahrzeug (51) fährt oder angehalten hat, detektiert und
die Bestimmungsvorrichtung (85) die Bestimmung auf der Grundlage des Bewegungszustands des vorausfahrenden Fahrzeugs und des Bewegungszustands des folgenden Fahrzeugs vornimmt.

5. Fahrzeugsteuerungsvorrichtung nach Anspruch 4, wobei dann, wenn sich das vorausfahrende Fahrzeug (52) vom Trägerfahrzeug (51) entfernt und sich das folgende Fahrzeug (53) dem Trägerfahrzeug (51) nähert, die Bestimmungsvorrichtung (85) bestimmt, dass das Trägerfahrzeug (51) die Bewegung des folgenden Fahrzeugs (53) behindert.

6. Fahrzeugsteuerungsvorrichtung nach Anspruch 4, wobei dann, wenn das vorausfahrende Fahrzeug (54) vor dem Trägerfahrzeug (51) angehalten hat und das folgende Fahrzeug (53) hinter dem Trägerfahrzeug (51) angehalten hat oder sich dem Trägerfahrzeug (51) nähert, die Bestimmungsvorrichtung (85) bestimmt, dass das Trägerfahrzeug (51) die Bewegung des folgenden Fahrzeugs (53) behindert.

7. Fahrzeugsteuerungsvorrichtung nach Anspruch 2 oder 3, die ferner einen Trägerfahrzeugbewegungszustands-Detektor (84) umfasst, der konfiguriert ist, einen Bewegungszustand des Trägerfahrzeugs (51) zu detektieren, wobei
dann, wenn das Trägerfahrzeug (51) mit einer vorgegebenen Entfernungsmarge vor dem Trägerfahrzeug (51) anhält und das folgende Fahrzeug (53) sich dem Trägerfahrzeug (51) nähert, die Bestimmungsvorrichtung (85) bestimmt, dass das Trägerfahrzeug (51) die Bewegung des folgenden Fahrzeugs (53) behindert.

8. Fahrzeugsteuerungsvorrichtung nach Anspruch 1, die Folgendes umfasst:
einen Trägerfahrzeugbewegungszustands-Detektor (84), der konfiguriert ist, einen Bewegungszustand des Trägerfahrzeugs (100; 51) zu detektieren; und
einen Umgebungsdetektor (83), der konfiguriert ist, eine Umgebung des Trägerfahrzeugs (51) zu detektieren; wobei
die Bestimmungsvorrichtung (85) konfiguriert ist, auf der Grundlage des Bewegungszustands und der Umgebung des Trägerfahrzeugs (51) zu bestimmen, ob das Trägerfahrzeug (51) mit dem Verkehrsfluss fährt; und
die Benachrichtigungssteuereinheit (86) konfiguriert ist, ein Signal auszugeben, um zu verursachen, dass die Benachrichtigungsvorrichtung (22), die im Trägerfahrzeug (100; 51) installiert ist, die Benachrichtigung vornimmt, wenn die Bestimmungsvorrichtung (85) bestimmt, dass das Trägerfahrzeug (51) nicht mit dem Verkehrsfluss fährt.

## Revendications

1. Dispositif de commande de véhicule configuré pour commander un propre véhicule (100 ; 51) capable de conduite automatique ;
dans lequel, quand le propre véhicule (51) dans un mode de conduite automatique gêne une circulation d'un autre véhicule (52 ; 53) ou ne circule pas avec le flux de trafic, une notification est donnée à un conducteur du propre véhicule (51) ;
dans lequel le dispositif de commande de véhicule comprend :
un détecteur d'état de circulation d'un autre véhicule (81 ; 82) configuré pour détecter un état de circulation de l'autre véhicule ;
un moyen de détermination (85) configuré pour déterminer si le propre véhicule (51) gêne la circulation de l'autre véhicule (52 ; 53) sur la base de l'état de circulation de l'autre véhicule ;
un contrôleur de notification (86) configuré pour sortir un signal destiné à amener un dispositif de notification (22) installé dans le propre véhicule (100 ; 51) à faire la notification quand le moyen de détermination (85) détermine que le propre véhicule (51) gêne la circulation de l'autre véhicule (52 ; 53) ;
un détecteur d'intention de conducteur (87) configuré pour détecter une intention du conducteur du propre véhicule (51) pour la notification ; et
un commutateur de conduite (88) configuré pour commuter un mode de conduite du propre véhicule (100 ; 51) depuis une conduite automatique vers une conduite manuelle en accord avec l'intention du conducteur,
dans lequel le contrôleur de notification (86) sort des informations représentant un résultat de la détermination faite par le moyen de détermination (85) pour donner au conducteur une suggestion d'une commutation depuis une conduite automatique vers une conduite manuelle à titre de signal.

2. Dispositif de commande de véhicule selon la revendication 1, dans lequel le détecteur d'état de circulation d'un autre véhicule (82) détecte un état de circulation d'un véhicule suivant (53) se déplaçant derrière le propre véhicule (51) à titre d'état de circulation de l'autre véhicule, et
le moyen de détermination (85) fait la détermination sur la base de l'état de circulation du véhicule suivant.

3. Dispositif de commande de véhicule selon la revendication 2, dans lequel, quand le véhicule suivant (53) se rapproche du propre véhicule (51), le moyen de détermination (85) détermine que le véhicule propre (51) gêne une circulation du véhicule suivant (53).

4. Dispositif de commande de véhicule selon la revendication 2 ou 3, dans lequel le détecteur d'état de circulation d'un autre véhicule (81) détecte en outre un état de circulation d'un véhicule précédent (52 ; 54) qui circule ou s'arrête devant le propre véhicule (51), et
le moyen de détermination (85) fait la détermination sur la base de l'état de circulation du véhicule précédent et de l'état de circulation du véhicule suivant.

5. Dispositif de commande de véhicule selon la revendication 4, dans lequel, quand le véhicule précédent (52) se déplace en éloignement du propre véhicule (51) et que le véhicule suivant (53) se rapproche du propre véhicule (51), le moyen de détermination (85) détermine que le propre véhicule (51) gêne la circulation du véhicule suivant (53).

6. Dispositif de commande de véhicule selon la revendication 4, dans lequel, quand le véhicule précédent (54) s'arrête devant le propre véhicule (51) et que le véhicule suivant (53) s'arrête derrière le propre véhicule (51) ou se rapproche du propre véhicule (51), le moyen de détermination (85) détermine que le propre véhicule (51) gêne la circulation du véhicule suivant (53).

7. Dispositif de commande de véhicule selon la revendication 2 ou 3, comprenant en outre un détecteur d'état de circulation de propre véhicule (84) configuré pour détecter un état de circulation du propre véhicule (51),
dans lequel, quand le propre véhicule (51) s'arrête avec une distance de sécurité prédéterminée devant le propre véhicule (51) et que le véhicule suivant (53) se rapproche du propre véhicule (51), le moyen de détermination (85) détermine que le propre véhicule (51) gêne la circulation du véhicule suivant (53).

8. Dispositif de commande de véhicule selon la revendication 1, comprenant :
un détecteur d'état de circulation de propre véhicule (84) configuré pour détecter un état de circulation du propre véhicule (100 ; 51) ;
un détecteur d'environnement alentour (83) configuré pour détecter un environnement alentour du propre véhicule (51) ;
dans lequel le moyen de détermination (85) est configuré pour déterminer si le propre véhicule (51) circule avec le flux de trafic sur la base de l'état de circulation et de l'environnement alentour du propre véhicule (51) ; et
dans lequel le contrôleur de notification (86) est configuré pour sortir un signal destiné à amener le dispositif de notification (22) installé dans le propre véhicule (100 ; 51) à faire la notification quand le moyen de détermination (85) détermine que le propre véhicule (51) ne circule pas avec le flux de trafic.
